# EUROPÄISCHE PATENTSCHRIFT

(11) **EP 2 213 156 B1**
(45) Veröffentlichungstag und Bekanntmachung des Hinweises auf die Patenterteilung: **03.04.2013**
(21) Anmeldenummer: 10003552.6
(22) Anmeldetag: 12.04.2006
(51) Int. Cl.: A01D 34/86

(54) **Mäh- und/oder Schneidgerät**
Mowing and/or cutting device
Appareil à faucher et/ou couper

(30) Priorität: 22.04.2005 DE 202005006541 U; 22.04.2005 DE 102005018987; 22.04.2005 DE 202005006539 U; 22.04.2005 DE 202005006542 U; 22.04.2005 DE 202005006540 U
(43) Veröffentlichungstag der Anmeldung: 04.08.2010
(62) Teilanmeldung aus: 06007677.5
(73) Patentinhaber: Gerhard Dücker GmbH & Co. KG Landmaschinenfabrik, 48703 Stadtlohn (DE)
(72) Erfinder: Dücker, Gerhard, 48703 Stadtlohn (DE)
(74) Vertreter: Busse, Harald F.W.

(56) Entgegenhaltungen:
- EP-A- 1 159 866
- EP-A1- 1 364 572
- DE-U1- 20 211 861

## Beschreibung

Die Erfindung betrifft ein Mäh- und/oder Schneidgerät mit einem an einem Fahrzeug halterbaren und gegenüber diesem beweglichen Ausleger mit mehreren Abschnitten nach dem Oberbegriff des Anspruchs 1 und einen Ausleger nach dem Oberbegriff des Anspruchs 10.

Bei solchen Mäh- und/oder Sehneidgeräten ist es bekannt, in Arbeitsstellung den Ausleger von einem Fahrzeug aus seitlich ausgreifen zu lassen und ihn in Transportstellung zum Beispiel vor dem Fahrzeug eingefaltet zu halten. Dabei ist es üblich, fahrzeugseitig einen ersten Abschnitt des Auslegers um eine vertikale und/oder eine horizontale Achse schwenkbar zu halten und somit die Schwenkbewegung zum Beispiel zwischen Transport- und Arbeitsstellung zu ermöglichen. Ein zweiter, ähnlich langer Abschnitt des Auslegers ist an das dem Fahrzeug abgewandte Ende des ersten Abschnitts mit einem Freiheitsgrad angelenkt und ermöglicht je nach Winkelstellung zwischen den beiden Abschnitten ein unterschiedlich weites Ausgreifen des am äußeren Auslegerende gehaltenen Arbeitskopfes.

Da solche Mäh- und/oder Schneidgeräte in Arbeitsstellung auch verschiedenste Hindernisse übergreifen müssen, die am Straßenrand stehen, zum Beispiel Hecken, insbesondere aber Verkehrsschilder, Ortsschilder, eventuell Ampel- und Laternenmasten und ähnliches, muß der Ausleger sehr flexibel beweglich sein. Bei üblichen Auslegern tritt die Schwierigkeit auf, daß zwischen dem ersten und zweiten Abschnitt in deren zum Übergreifen eines Hindernisses aufgestellter Stellung ein spitzer Winkel entsteht und damit ein zwar hohes, allerdings nur sehr schmales Hindernis übergriffen werden kann. Insbesondere ein Übergreifen von Orts- oder Richtungshinweisschildern ist damit dann nicht möglich. Zudem ist bei derart lang erstreckten Auslegerabschnitten problematisch, diese in einer Transportstellung quer zum Fahrzeug zu halten und dabei sicherzustellen, daß eine hinreichende Sicht oberhalb des Fahrzeugs erhalten bleibt und daß andererseits die maximal zulässige Fahrzeugbreite nicht überschritten wird.

Die EP 1 364 572 A1 zeigt ein Mähgerät mit zumindest einem an einem fahrzeugseitigen Träger beweglich gehaltene und mehrere miteinander verbundene Abschnitte umfassenden Ausleger, der in einer Arbeitsstellung auswärts erstreckt ist und zumindest einen Arbeitskopf trägt, wobei der Ausleger vom Träger ausgehend zumindest einen ernsten, in einer Arbeitsstellung hoch aufragbaren Abschnitt, einen daran anschließenden quer ausgreifbaren zweiten Abschnitt und zumindest einen dritten, abwärts in Richtung Arbeitskopf erstreckbaren Abschnitt, umfaßt, wobei der Ausleger in einer Quertransportstellung quer vor dem Fahrzeug derart halterbar ist, daß der erste Abschnitt quer zum Fahrzeug, der zweite Abschnitt vertikal aufwärts und der dritte Abschnitt horizontal mit einer dem ersten Abschnitt entgegengesetzten Querkomponente verläuft. Selbst das wie bei einem Bagger ausgebildete Führerhaus, das vollständig oberhalb eines Fahrzeugrahmens und damit sehr hoch - drehbar gehalten ist, erlaubt nicht die freie Sicht über den oben quer liegenden Teil des dort gezeigten Auslegers hinweg, sondern dieser Querträger liegt im Blickfeld und erschwert daher selbst dort noch den Blick auf die Straße. Bei einem Fahrzeug wie bei einem Unimog wäre eine solche Transportstellung gänzlich ausgeschlossen, da dann der obere Abschnitt mit dem Mähkopf direkt im Blickfeld des Fahrers läge.

Der Erfindung liegt das Problem zugrunde, ein Mäh- und/oder Schneidgerät hinsichtlich seiner Transportstellung zu optimieren.

Die Erfindung löst dieses Problem durch ein Mäh- und/oder Schneidgerät mit den Merkmalen des Anspruchs 1 sowie durch einen Ausleger mit den Merkmalen des Anspruchs 10. Hinsichtlich vorteilhafter Ausgestaltungen wird auf die abhängigen Ansprüche 2 bis 9 sowie 11 und 12 verwiesen.

Durch die Erfindung ist ein Mäh- und/oder Schneidgerät geschaffen, das einen im Betriebsstellung lang erstreckbaren Ausleger umfassen kann, der mehrere gelenkig miteinander verbundene Abschnitte umfaßt und der dennoch in seiner Transportstellung raumsparend und quer vor oder hinter dem Fahrzeug derart halterbar ist, daß die Sicht oberhalb des eingefalteten Auslegers erhalten bleibt und daß dieser eine geringe Breite aufweisen kann, in der er die zulässige Gesamtbreite unterschreitet.

Wenn besonders vorteilhaft in der Quertransportstellung der dritte Abschnitt in seine kürzeste Stellung eingefahren ist und der Mähkopf derart horizontal gehalten ist, daß er innerhalb der maximal zulässigen Fahrzeugbreite bleibt, ist nicht nur der Ausleger, sondern auch der Mähkopf innerhalb der Fahrzeugbreite gehalten und eine Unfallgefahr damit minimiert.

Trotz des geringen Packmaßes in Quertransportstellung können mit einem solchen Ausleger auch breite Hindernisse übergriffen werden, wobei der quer ausgreifende Abschnitt in dieser übergreifenden Stellung oberhalb des Hindernisses geführt ist.

Der Ausleger formt dabei günstig ein Portal aus, dessen oberer Rahmenteil im wesentlichen quer verläuft und damit eine erhebliche Breite überbrückt.

Dabei kann aufgrund seiner Horizontallagerung in Transportstellung der von dem Träger aufragbare erste Abschnitt des Auslegers in einer Arbeitsstellung eine Länge von zumindest 1,80 Meter aufweisen und dennoch in Transportstellung die maximal zulässige Breite unterschreiten.

Eine gemeinsame Einstellbarkeit der Winkel zwischen dem ersten und zweiten Abschnitt einerseits und zwischen dem zweiten und dritten Abschnitt andererseits läßt eine konstruktiv und auch hinsichtlich der Bedienung einfache Steuerung zu.

Besonders günstig ist der dritte, dem Arbeitskopf zugewandte Abschnitt dabei längenvariabel, um auch bei einer hohen Stellung des ein Hindernis übergreifenden Abschnitts noch bis zum Boden reichen zu können und somit auch während des Übergreifens des Hindernisses ein unbeeinträchtigtes Mähergebnis liefern zu können, wobei andererseits eine kompakte Transportstellung möglich bleibt.

Der zweite, an den ersten angelenkte Abschnitt kann eine Längenerstreckung von mindestens 90 Zentimetern, häufig deutlich über 1,20 Meter aufweisen, wodurch auch das Übergreifen von breiten Richtungs- und Ortshinweisschildern möglich wird.

Auch ein Übergreifen eines Führerhauses des Fahrzeuges ist mit dem erfindungsgemäßen Ausbildung unproblematisch möglich, wobei durch den aufragenden ersten Abschnitt dieser auch dicht vor einer steil stehenden Windschutzscheibe stehen kann und anders als im Stand der Technik keinen großen Abstand von dieser in Fahrzeuglängsrichtung benötigt.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Ansicht von vorne eines erfindungsgemäßen Mäh- und/oder Schneidgeräts mit einer frontseitig an einem Fahrzeug angeordneten Mähvorrichtung in Arbeitsstellung mit ein Hindernis übergreifendem Ausleger,
- Fig. 2: eine ähnliche Ansicht wie Fig. 1 mit in Transportstellung befindlichem Ausleger,
- Fig. 3: das Mäh- und/oder Schneidgerät nach Fig. 1 in Seitenansicht mit in Längstransportstellung befindlichem Ausleger,
- Fig. 4: eine ähnliche Ansicht wie Fig. 3 mit einer erhöhten und weiter vorne gelegenen Ablage auf der Ladefläche für den Arbeitskopf.

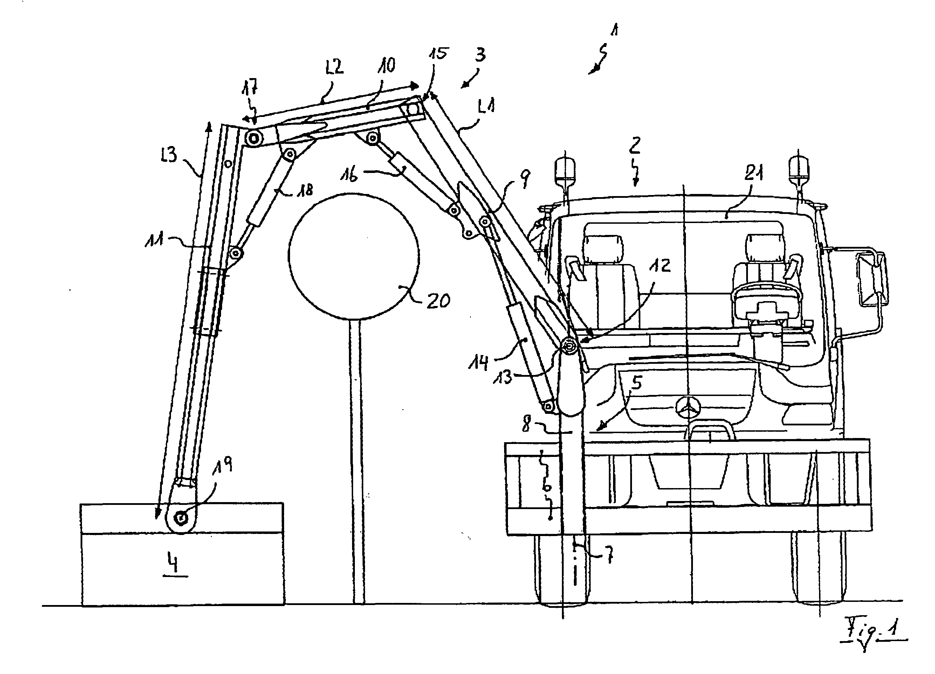

Das in Figur 1 dargestellte und insgesamt mit 1 bezeichnete Mäh- und/oder Schneidgerät umfaßt ein hier selbstfahrendes Fahrzeug 2, was nicht zwingend ist, einen mehrteiligen Ausleger 3 und zumindest einen Arbeitskopf 4, der beispielsweise als Mäh-, Schneid- oder Fräskopf oder als Räum- oder Reinigungskopf ausgebildet sein kann. Er kann mit Schneid- und/oder Schlagmitteln versehen sein. Neben Grasmähköpfen mit einer oder mehreren vertikal oder horizontal rotierenden Schneid- oder Schlagwalzen ist so beispielsweise auch eine reine Heckenschere oder dergleichen montierbar. Neben der hier gezeigten Frontmontage des Auslegers 3 kommt zusätzlich oder alternativ auch eine Montage auf der Ladefläche oder eine Heckmontage eines Auslegers 3 in Betracht.

Der Ausleger 3 ist an einem Träger 5 montiert, der eine Querführungseinrichtung 6 mit zum Beispiel zwei Horizontalprofilen und eine daran quer zum Fahrzeug 2 verschiebliche und aufragende Halterung 8 mit einer vertikalen Schwenkachse 7 umfaßt, um die herum der Ausleger 3 schwenkbar ist. Da diese Halterung 8 selbst gegenüber der Querführungseinrichtung 6 nicht seitlich ausgreift, wird sie hier nicht als erster Abschnitt des Auslegers bezeichnet. Dies wäre in anderer Diktion jedoch möglich. Entsprechend wären dann die weiteren Abschnitte anders zu numerierten.

An dem Träger 5 ist der Ausleger 3 in der Aufnahme der Halterung 8 drehbar um die Achse 7 gelagert. Ausgehend hiervon, umfaßt der Ausleger 3 zumindest einen ersten, in einer Arbeitsstellung (Fig. 1) hoch aufragbaren Abschnitt 9, einen daran anschließenden quer ausgreifbaren zweiten Abschnitt 10 und einen dritten, abwärts in Richtung Arbeitskopf 4 erstreckbaren Abschnitt 11. An diesem ist direkt oder unter Zwischenschaltung weiterer Abschnitte der Arbeitskopf 4 schwenkbeweglich um die Achse 19 angehängt. Zur Drehung um diese Achse können optisch verdeckt zwei parallele, im Abschnitt 11 gelegene Hydraulikylindcr vorgesehen sein, die über Zugseile gleichwertige Drehungen des Arbeitskopfes 4 in beide Richtungen um die Achse 19 bewirken können.

Das Fahrzeug 2 kann als Schmalspurtraktor ausgebildet sein, um damit einen flexiblen Einsatz auch in engen Bereichen zu ermöglichen. Auch größere, LKW-ähnliche Fahrzeuge sind möglich. Zudem kann die Arbeitsposition des Arbeitskopfes 4 von rechts auf links variiert werden.

Der erste Abschnitt 9 ist neben seiner Drehbatkeit um die vertikale Achse 7 gegenüber der aufragenden Halterung 8 schwenkbeweglich um ein Gelenk 12 mit einer horizontalen Achse 13. Zum Antrieb der Schwenkbewegung um dieses Gelenk 12 dient ein erstes Antriebsorgan 14, hier ein Hydraulikzylinder. Dieser Abschnitt 9 muß daher nicht in jeder Arbeitsstellung hoch aufragen, sondern kann auch nahezu horizontal ausgreifen und somit einen großen Arbeitsbereich abdecken.

An dem vom Fahrzeug 2 ausgreifenden Ende des ersten Abschnitts 9 ist an dem Gelenk 15, dessen Schwenkachse zur Achse 13 des Gelenks 12 parallel liegt, ein zweiter Abschnitt 10 des Auslegers 3 schwenkbeweglich anmontiert. Zum Antrieb der Schwenkbewegung um dieses Gelenk 15 dient ein zweites Antriebsorgan 16, hier ebenfalls ein Hydraulikzylinder. Der zweite Abschnitt 10 muß daher nicht in jeder Arbeitsstellung ungefähr rechtwinklig zum ersten Abschnitt 9 stehen, sondern kann diesen auch in etwa verlängern oder sehr spitzwinklig dazu stehen - je nach momentaner Anforderung.

An dem dem Gelenk 15 abgewandten Ende des zweiten Abschnitts 10 ist an dem Gelenk 17, dessen Schwenkachse wiederum zur Achse 13 des Gelenks 12 parallel liegt, ein dritter Abschnitt 11 des Auslegers 3 schwenkbeweglich anmontiert. Zum Antrieb der Schwenkbewegung um dieses Gelenk 17 dient ein drittes Antriebsorgan 18, hier wiederum ein Hydraulikzylinder.

Dabei können besonders einfach die Winkelstellungen zwischen dem ersten 9 und dem zweiten Abschnitt 10 einerseits und zwischen dem zweiten 10 und dem dritten Abschnitt 11 andererseits über eine gemeinsame Ansteuerung und Beaufschlagung der Antriebsorgane 16 und 18 mit nur einem Bedienknopf und einer gemeinsamen Leitung einstellbar sein.

Der von dem Träger 5 aufragbare erste Abschnitt 9 des Auslegers 3 ist hier wie auch der zweite Abschnitt 10 als starres Profil ausgebildet, könnte jedoch auch längenvariabel sein.

Zumindest in einer Arbeitsstellung kann der erste Abschnitt eine Länge L1 von zumindest etwa 1,80 Meter aufweisen, um auch hohe Hindernisse 20 übergreifen zu können. Das Gelenk 15 liegt dadurch in der Stellung nach Fig. 1 etwa 3,00 Meter bis 3, 30 Meter oberhalb des Straßenniveaus. Im gezeichneten Ausführungsbeispiel beträgt die Länge L1 des ersten Abschnitts 9 etwa zwei Meter, um diese Höhe zu erreichen und dennoch den Winkel im Gelenk 12 nicht zu nah an 180° herankommen zu lassen, was im Hinblick auf den Seitenabstand des Fahrzeugs 2 zum Hindernis 20 und auch für die Kraftlinie des Hydraulikzylinders 14 ungünstig wäre.

Der zweite Abschnitt 10 des Auslegers 3 kann hingegen zumindest in dieser Arbeitsstellung deutlich kürzer sein. Er hat insbesondere eine - ggf. variable - Länge L2 zwischen 0,70 und 1,60 Meter. In der in Fig. 1 gezeigten Arbeitsstellung formt dieser Abschnitt 10 den oberen Rahmenteil eines von dem Ausleger gebildeten Portals und übergreift das Hindernis 20 im wesentlichen horizontal oder nur gering geneigt liegend. Dadurch ergibt sich eine optimierte lichte Weite unterhalb des Portals, die nahezu die gesamte Länge L2 des Abschnitts 10 umfassen kann. Es kann auch andere Arbeitsstellungen geben, in denen ein beispielsweise längenvariabler zweiter Abschnitt die Länge des ersten Abschnitts 9 auch überragen könnte. In jedem Fall gibt es aber eine Stellung, in der der Abschnitt 10 kürzer als der erste Abschnitt 9 ist, um somit ein Plazieren des Arbeitskopfes 4 dicht neben dem übergriffenen Hindernis 20 zu ermöglichen.

Der dritte Abschnitt 11 ist hier nach Art eines Teleskops längenvariabel, so daß er eine Länge L3 von etwa einem bis etwa zwei Metern haben kann. In Transportstellung vor dem Fahrzeug 2 kann er auf minimale Länge eingefahren sein und dadurch das Transportmaß begrenzen. Der Arbeitskopf 4 kann dann derart horizontal gehalten ist, daß er innerhalb der maximal zulässigen Fahrzeugbreite bleibt. Auch in Arbeitsstellung nach Fig. 1 könnte der Abschnitt 11 zumindest teilweise eingefahren sein, um dadurch den Arbeitskopf zum Beispiel trotz des Übergreifens des Hindernisses 20 an einer seitlich ansteigenden Böschung oder als Heckenschere einsetzen zu können. Auch eine schwimmende Lagerung ist möglich.

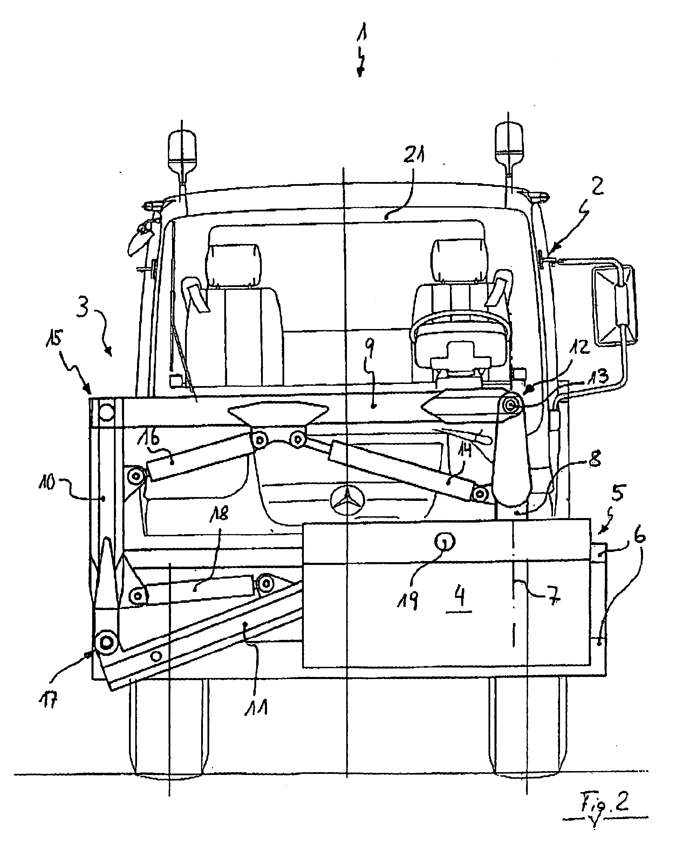

In der in Figur 2 gezeigten Quertransportstellung ist der Ausleger 3 quer vor (oder hinter) dem Fahrzeug 2 derart halterbar, daß der erste Abschnitt 9 als oberster Teil des Auslegers 3 etwa an der Unterkante einer Windschutzscheibe quer zum Fahrzeug 2 liegt, der zweite Abschnitt 10 zumindest nahezu vertikal abwärts weist, was aufgrund seiner geringen Länge möglich ist, und der dritte Abschnitt 11 in eingefahrener Stellung schräg aufwärts mit einer dem ersten Abschnitt entgegengesetzten Querkomponente verläuft. Das Packmaß ist daher minimiert, die Breite gering. Der Mähkopf 4 kann so horizontal und weit unten gehalten werden, dem Fahrer bleibt dadurch ein optimiertes Sichtfeld.

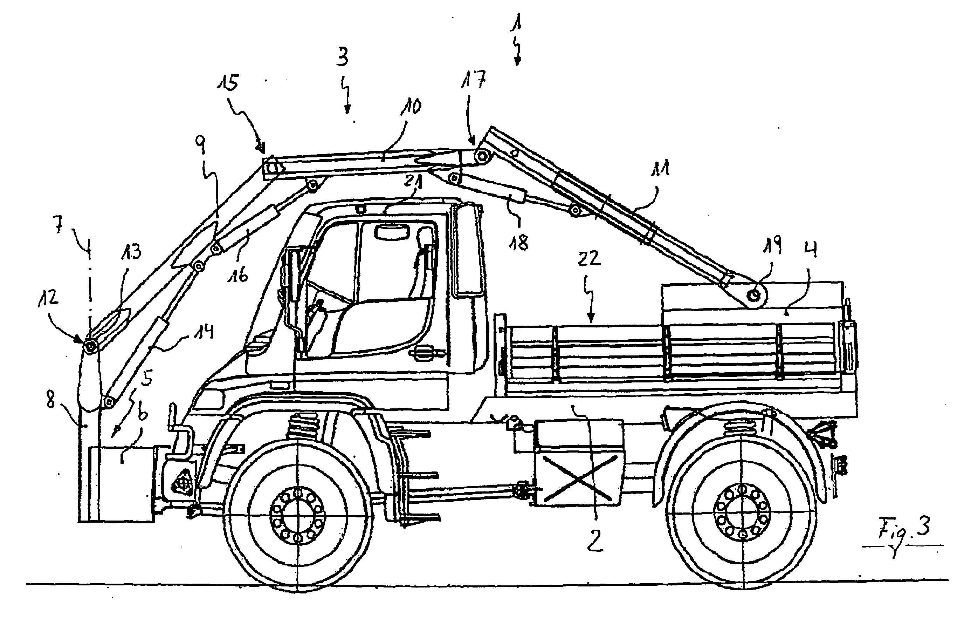

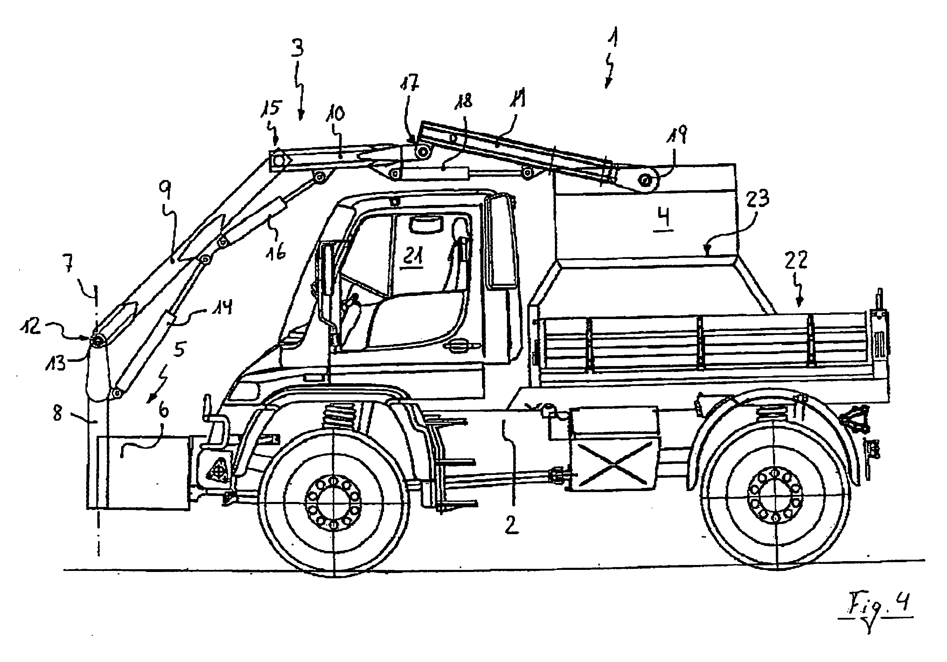

Zusätzlich zu der Quertransportstellung ist auch noch zumindest eine in den Figuren 3 und 4 dargestellte Längstransportstellung ermöglicht, in der der Ausleger 3 bei frontseitigem Anbau längs zum Fahrzeug halterbar ist, wobei der erste Abschnitt 9 so weit aufgestellt ist, daß seine Anlenkung 15 zum zweiten Abschnitt 10 das Führerhaus 21 überragt, der zweite Abschnitt annähernd horizontal oberhalb des Führerhauses 21 gelegen ist und der dritte Abschnitt 11 sich leicht abwärts in Richtung einer Ladefläche 22 erstreckt, wo eine - in der Darstellung nach Fig. 4 erhöhte - Ablage 23 für den Arbeitskopf 4 vorgesehen sein kann. Dadurch, daß der erste Abschnitt 9 dabei steil aufragen kann, und zur Überbrückung zu dem den Arbeitskopf tragenden letzen Abschnitt 11 ein. Zwischenabschnitt 10 vorgesehen ist, kann die Windschutzscheibe steil stehen, ohne daß eine Kollisionsgefahr mit dem Ausleger 3 entsteht. Dennoch muß die Halterung 8 für den Ausleger nicht weit vor der Windschutzscheibe plaziert werden, um diese Kollisionsfreiheit zu ermöglichen. Auch die Fahrzeuglänge kann daher gering bleiben.

In dieser Längstransportstellung ist eine Längen- und/oder Winkeleinstellung des dritten Abschnitts 11 an die Geometrie der jeweiligen Ladefläche 22 anpaßbar, so daß auch die Höhe der Ablage 23 und deren Längsausrichtung unterschiedlich sein kann. In Fig. 3 ist der dritte Abschnitt 11 des Auslegers teilweise ausgefahren, so daß der Arbeitskopf hier im Heckbereich der Ladefläche 22 liegt, in Fig. 4 ist für eine weiter vorne und oben gelegene Stellung des Arbeitskopfes 4 der dritte Abschnitt 1 eingefahren. An die Fahrzeuggeometrie sind daher keine besonderen Anforderungen zu stellen. Es können auch verschiedene bestehende Fahrzeuge 2 nachträglich mit einem erfindungsgemäßen Ausleger 3 nachgerüstet werden.

Insgesamt kann die den Ausleger 3 und Arbeitskopf 4 umfassende Einheit kompakt und modular ausgebildet sein. Durch die gemeinsame Ansteuerung der Hydraulikzylinder 16 und 18 kann die Einheit auch an solche Steuerungen angeschlossen werden, die auf herkömmliche Ausleger mit einem Gelenk weniger ausgelegt waren.

Auch ist es vorteilhaft möglich, für bestimmte Anwendungen den zweiten Abschnitt 10 zu entfernen und den dritten Abschnitt 11 direkt an den ersten Abschnitt 9 anzusetzen. Die Abschnitte 9, 10, 11 sind insoweit modular ausgebildet.

### Bezugszeichenliste:

- 1: Mäh- und oder Schneidgerät,
- 2: Fahrzeug,
- 3: Ausleger,
- 4: Arbeitskopf,
- 5: Träger,
- 6: Querführungseinrichtung,
- 7: Schwenkachse,
- 8: Halterung,
- 9: erster Abschnitt,
- 10: zweiter Abschnitt,
- 11: dritter Abschnitt des Auslegers,
- 12: Gelenk,
- 13: Gelenkachse,
- 14: Antriebsorgan,
- 15: Gelenk,
- 16: Antriebsorgan,
- 17: Gelenk,
- 18: Antriebsorgan,
- 19: Achse,
- 20: Hindernis,
- 21: Führerhaus,
- 22: Ladefläche,
- 23: Ablage

## Patentansprüche

1. Mäh- und/oder Schneidgerät (1) mit zumindest einem an einem fahrzeugseitigen Träger (5) beweglich gehaltenen und mehrere gelenkig miteinander verbundene Abschnitte (9;10;11) umfassenden Ausleger (3), der in einer Arbeitsstellung auswärts erstreckt ist und zumindest einen Arbeitskopf (4) trägt, wobei der Ausleger (3) vom Träger (5) ausgehend zumindest einen ersten auf- und abwärts beweglichen, in einer Arbeitsstellung hoch aufragbaren Abschnitt (9), einen daran anschließenden quer ausgreifbaren zweiten Abschnitt (10) und zumindest einen dritten, abwärts in Richtung Arbeitskopf (4) erstreckbaren Abschnitt (11) umfaßt,
**dadurch gekennzeichnet,**
**daß** der Ausleger (3) in einer Quertransportstellung quer vor oder hinter dem Fahrzeug (2) derart halterbar ist, daß der erste Abschnitt (9) quer zum Fahrzeug (2), der zweite Abschnitt (10) zumindest nahezu vertikal abwärts und der dritte Abschnitt (11) schräg aufwärts oder nahezu horizontal mit einer dem ersten Abschnitt (9) entgegengesetzten Querkomponente verläuft.

2. Mäh- und/oder Schneidgerät nach Anspruch 1,
**dadurch gekennzeichnet,**
**daß** in der Quertransportstellung der dritte Abschnitt (11) in seine kürzeste Stellung eingefahren ist und der Mähkopf (4) derart horizontal gehalten ist, daß er innerhalb der maximal zulässigen Fahrzeugbreite bleibt.

3. Mäh- und/oder Schneidgerät nach einem der Ansprüche 1 oder 2,
**dadurch gekennzeichnet,**
**daß** der von dem Träger (5) aufragbare erste Abschnitt (9) des Auslegers (3) in einer Arbeitsstellung eine Länge (L1) von zumindest 1,80 Meter aufweist.

4. Mäh- und/oder Schneidgerät (1) nach einem der Ansprüche 1 bis 3,
**dadurch gekennzeichnet,**
**daß** der zweite Abschnitt (10) des Auslegers (3) eine Länge (L2) zwischen 0,70 und 1,60 Meter aufweist.

5. Mäh- und/oder Schneidgerät (1) nach einem der Ansprüche 1 bis 4,
**dadurch gekennzeichnet,**
**daß** zumindest der dritte Abschnitt (11) des Auslegers (3) längenvariabel ist.

6. Mäh- und/oder Schneidgerät nach einem der Ansprüche 1 bis 5,
**dadurch gekennzeichnet,**
**daß** der Ausleger (3) bei frontseitigem Anbau in einer Längstransportstellung längs zum Fahrzeug halterbar ist, wobei der erste Abschnitt (9) so weit aufgestellt ist, daß seine Anlenkung (15) zum zweiten Abschnitt das Führerhaus (21) überragt, der zweite Abschnitt (10) oberhalb des Führerhauses (21) gelegen ist und der dritte Abschnitt (11) sich abwärts in Richtung einer Ladefläche (22) erstreckt.

7. Mäh- und/oder Schneidgerät nach Anspruch 6,
**dadurch gekennzeichnet,**
**daß** in der Längstransportstellung eine Längen- und/oder Winkeleinstellung des dritten Abschnitts (11) an die Geometrie der jeweiligen Ladefläche (22) anpaßbar ist.

8. Mäh- und/oder Schncidgerät nach einem der Ansprüche 1 bis 7,
**dadurch gekennzeichnet,**
**daß** die Winkelstellungen zwischen dem ersten (9) und dem zweiten Abschnitt (10) einerseits und zwischen dem zweiten (10) und dem dritten Abschnitt (11) andererseits gemeinsam einstellbar sind.

9. Mäh- und/oder Schneidgerät nach Anspruch 8,
**dadurch gekennzeichnet,**
**daß** für die Einstellung der beiden Winkelstellungen gemeinsam beaufschlagbare Hydraulikzylinder (16;18) vorgesehen sind.

10. Ausleger (3) mit mehreren gelenkig miteinander verbundenen Abschnitten (9;10;11), der in einer Arbeitsstellung auswärts erstreckt ist und zumindest einen Arbeitskopf (4) abstützt und an einem fahrzeugseitigen Träger (5) beweglich halterbar ist, wobei der Ausleger (3) vom Träger (5) ausgehend zumindest einen ersten auf- und abwärts beweglichen, in einer Arbeitsstellung hoch aufragbaren Abschnitt (9), einen daran anschließenden quer ausgreifbaren zweiten Abschnitt (10) und einen dritten, abwärts in Richtung Arbeitskopf (4) erstreckbaren Abschnitt (11) umfaßt,
**dadurch gekennzeichnet,**
**daß** der Ausleger (3) in einer Quertransportstellung quer vor oder hinter dem Fahrzeug (2) derart halterbar ist, daß der erste Abschnitt (9) quer zum Fahrzeug (2), der zweite Abschnitt (10) zumindest nahezu vertikal abwärts und der dritte Abschnitt (11) schräg aufwärts oder nahezu horizontal mit einer dem ersten Abschnitt (9) entgegengesetzten Querkomponente verläuft..

11. Ausleger (3) nach Anspruch 10,
**dadurch gekennzeichnet,**
**daß** in einer Arbeitsstellung die drei Abschnitte (9;10;11) ein hoch erstrecktes Portal zum Übergreifen eines Hindernisses (20) ausbilden.

12. Ausleger (3) nach einem der Ansprüche 10 oder 11,
**dadurch gekennzeichnet,**
**daß** der dritte Abschnitt (11) nach Entfernen des zweiten Abschnitts (10) direkt an den ersten Abschnitt (9) ansetzbar ist.

## Claims

1. A mowing and/or cutting device (1) having at least one boom (3) movably held on a vehicle-based support (5) and comprising a plurality of sections (9; 10; 11) connected to one another in an articulated manner, which is extended outward in a working position and carries at least one working head (4), wherein the boom (3) starting out from the support (5) comprises at least one first section (9) that can be moved upwards and downwards and raised in a working position, a second section (10) that follows thereon and is capable of reaching out transversely and at least one third section (11) that is extendable downwards in the direction of the working head (4),
**characterized in that**
the boom (3) in a transverse transport position can be held transversely in front or behind the vehicle (2) in such a manner that the first section (9) runs transversely to the vehicle (2), the second section (10) at least almost vertically downwards and the third section (11) obliquely upwards or almost horizontally to a transverse component that is opposite to the first section (9).

2. The mowing and/or cutting device according to Claim 1,
**characterized in that**
in the transverse transport position the third section (11) is retracted into its shortest position and the mowing head (4) is horizontally held in such a manner that it remains within the maximum permissible vehicle width.

3. The mowing and/or cutting device according to any one of the Claims 1 or 2,
**characterized in that**
the first section (9) of the boom (3) that can be raised from the support (5) has a length (L1) of at least 1.80 metres in a working position.

4. The mowing and/or cutting device (1) according to any one of the Claims 1 to 3,
**characterized in that**
the second section (10) of the boom (3) has a length (L2) between 0.70 and 1.60 metres.

5. The mowing and/or cutting device (1) according to any one of the Claims 1 to 4,
**characterized in that**
at least the first section (11) of the boom (3) is variable in length.

6. The mowing and/or cutting device according to any one of the Claims 1 to 5,
**characterized in that**
the boom (3) upon front-end attachment can be held alongside the vehicle in a longitudinal transport position, wherein the first section (9) is erected so far that its articulation (15) to the second section protrudes over the driver's cab (21), the second section (10) is located above the driver's cab (21) and the third section (11) extends downwards in the direction of a loading surface (22).

7. The mowing and/or cutting device according to Claim 6,
**characterized in that**
in the longitudinal transport position a length and/or angle setting of the third section (11) can be adapted to the geometry of the respective loading surface (22).

8. The mowing and/or cutting device according to any one of the Claims 1 to 7,
**characterized in that**
the angular settings between the first (9) and the second section (10) on the one hand and between the second (10) and the third section (11) on the other hand are jointly adjustable.

9. The mowing and/or cutting device according to Claim 8,
**characterized in that**
for adjusting the two angular positions jointly pressurizable hydraulic cylinders (16; 18) are provided.

10. An boom (3) having a plurality of sections (9; 10; 11) connected to one another in an articulated manner, which in a working position is extended outward and supports at least one working head (4) and can be movably held on a vehicle-based support (5), wherein the boom (3) starting out from the support (5) comprises at least one first section (9) that can be moved upwards and downwards and raised into a working position, a second section (10) that follows thereon and is capable of reaching out transversely and a third section (11) that can be extended in the direction of the working head (4),
**characterized in that**
the boom (3) can be held in a transverse transport position transversely in front or behind the vehicle (2) in such a manner that the first section (9) runs transversely to the vehicle (2), the second section (10) at least almost vertically downwards and the third section (11) obliquely upwards or almost horizontally with a transverse component that is opposite to the first section (9).

11. The boom (3) according to Claim 10,
**characterized in that**
in a working position the three sections (9; 10; 11) form a high-extended portal for engaging over an obstacle (20).

12. The boom (3) according to any one of the Claims 10 or 11,
**characterized in that**
the third section (11) following removal of the second section (10) can be directly joined to the first section (9).

## Revendications

1. Appareil à faucher et/ou couper (1) comportant au moins une potence (3) maintenue de manière mobile sur un support (5) du côté du véhicule et plusieurs portions (9 ; 10 ; 11) reliées les unes aux autres de manière articulée, laquelle est étendue vers l'extérieur dans une position de travail et supporte au moins une tête de travail (4), dans lequel la potence (3) comprend à partir du support (5) au moins une première portion (9) mobile en avant et en arrière, se dressant dans une position de travail, une deuxième portion (10) s'y rattachant et venant en prise transversalement et au moins une troisième portion (11) s'étendant en arrière dans la direction de la tête de travail (4),
**caractérisé en ce que**
la potence (3) peut être maintenue dans une direction de transport transversal transversalement à l'avant ou à l'arrière du véhicule (2) de telle sorte que la première portion (9) s'étende transversalement au véhicule (2), la deuxième portion (10) au moins approximativement verticalement vers l'arrière et la troisième portion (11) en oblique vers l'avant ou approximativement horizontalement avec un composant transversale opposé à la première portion (9).

2. Appareil à faucher et/ou couper selon la revendication 1,
**caractérisé en ce que**
dans la direction de transport transversale la troisième portion (11) est déployée dans sa position la plus courte et la tête de fauchage (4) est maintenue horizontalement de telle sorte qu'elle reste à l'intérieur de la largeur du véhicule autorisée maximale.

3. Appareil à faucher et/ou couper selon une des revendications 1 ou 2,
**caractérisé en ce que**
la première portion (9) de la potence (3) se dressant sur le support (5) présente dans une position de travail une longueur (L1) d'au moins 1,80 mètre.

4. Appareil à faucher et/ou couper (1) selon une des revendications 1 à 3,
**caractérisé en ce que**
la deuxième portion (10) de la potence (3) présente une longueur (L2) comprise entre 0,70 et 1,60 mètre.

5. Appareil à faucher et/ou couper (1) selon une des revendications 1 à 4,
**caractérisé en ce que**
au moins la troisième portion (11) de la potence (3) est variable en longueur.

6. Appareil à faucher et/ou couper selon une des revendications 1 à 5,
**caractérisé en ce que**
la potence (3) dans sa structure avant peut être maintenue longitudinalement sur le véhicule dans une direction de transport longitudinale, dans lequel la première portion (9) est placée assez loin pour que son joint articulé (15) soit en surplomb par rapport à la deuxième portion de la cabine du conducteur (21), la deuxième portion (10) est posée au-dessus de la cabine du conducteur (21) et la troisième portion (11) s'étend en arrière dans la direction d'une surface de chargement (22).

7. Appareil à faucher et/ou couper selon la revendication 6,
**caractérisé en ce que**
dans la direction de transport longitudinal un réglage angulaire et/ou longitudinal de la troisième portion (11) peut être adapté à la géométrie de la surface de chargement respective (22).

8. Appareil à faucher et/ou couper selon une des revendications 1 à 7,
**caractérisé en ce que**
les positions angulaires entre la première (9) et la deuxième portion (10) d'un côté et entre la deuxième (10) et la troisième portion (11) d'un autre côté peuvent être réglées en commun.

9. Appareil à faucher et/ou couper selon la revendication 8,
**caractérisé en ce que**
pour le réglage des deux positions angulaires, des vérins hydrauliques (16 ; 18) sollicités en commun sont prévus.

10. Potence (3) comportant plusieurs portions (9 ; 10 ; 11) reliées les unes aux autres de manière articulée, qui est étendue vers l'extérieur dans une position de travail et appuie au moins une tête de travail (4) et peut être maintenue de manière mobile sur un support du côté du véhicule (5), dans lequel la potence (3) comprend à partir du support (5) au moins une première portion (9) mobile en avant et en arrière, se dressant dans une position de travail, une deuxième portion (10) s'y rattachant et venant en prise transversalement et au moins une troisième portion (11) s'étendant en arrière dans la direction de la tête de travail (4),
**caractérisé en ce que**
la potence (3) est maintenue dans une direction de transport transversal transversalement à l'avant ou à l'arrière du véhicule (2) de telle sorte que la première portion (9) s'étende transversalement au véhicule (2), la deuxième portion (10) au moins approximativement verticalement vers l'arrière et la troisième portion (11) en oblique vers l'avant ou approximativement horizontalement avec un composant transversale opposé à la première portion (9).

11. Potence (3) selon la revendication 10,
**caractérisé en ce que** dans une position de travail les trois portions (9 ; 10 ; 11) constituent un portique élevé vers le haut afin d'empiéter sur un obstacle (20).

12. Potence (3) selon une des revendications 10 ou 11,
**caractérisé en ce que**
la troisième portion (11) peut être montée après le retrait de la deuxième portion (10) directement sur la première portion (9).
